(19) Europäisches Patentamt
European Patent Office
Office européen des brevets

(11) **EP 1 606 344 B1**

(12) **FASCICULE DE BREVET EUROPEEN**

(45) Date de publication et mention de la délivrance du brevet:
**05.09.2012 Bulletin 2012/36**

(21) Numéro de dépôt: **04718322.3**

(22) Date de dépôt: **08.03.2004**

(51) Int Cl.:
***C08K 3/32*** *(2006.01)*  ***C08L 95/00*** *(2006.01)*

(86) Numéro de dépôt international:
**PCT/FR2004/000543**

(87) Numéro de publication internationale:
**WO 2004/081098 (23.09.2004 Gazette 2004/39)**

(54) **LIANT BITUMINEUX ET SON PROCEDE DE PREPARATION**

BITUMINÖSES BINDEMITTEL UND VERFAHREN ZU DESSEN HERSTELLUNG

BITUMINOUS BINDER AND METHOD FOR THE PRODUCTION THEREOF

(84) Etats contractants désignés:
**AT BE BG CH CY CZ DE DK EE ES FI FR GB GR HU IE IT LI LU MC NL PL PT RO SE SI SK TR**

(30) Priorité: **07.03.2003 FR 0302896**

(43) Date de publication de la demande:
**21.12.2005 Bulletin 2005/51**

(73) Titulaires:
• **Eurovia**
  **92500 Rueil-Malmaison (FR)**
• **Innophos, Inc.**
  **Cranbury, NJ 08512 (US)**

(72) Inventeurs:
• **DUPUIS, Dominique**
  **60800 CREPY EN VALOIS (FR)**

• **LESUEUR, Didier**
  **28320 Pinto (Madrid) (ES)**
• **POTTI, Juan José**
  **28660 Madrid (ES)**
• **ORANGE, Gilles**
  **95230 Soisy Sous Montmorency (FR)**
• **GODBER, John**
  **75008 PARIS (FR)**

(74) Mandataire: **Ahner, Francis et al**
  **Cabinet Regimbeau**
  **20, rue de Chazelles**
  **75847 Paris Cedex 17 (FR)**

(56) Documents cités:
**WO-A-95/28446** **FR-A- 2 732 702**
**FR-A- 2 764 897** **US-A- 5 385 401**

**Description**

La présente invention a pour objet un procédé de préparation d'un liant bitumineux, le liant bitumineux susceptible d'être obtenu par ce procédé et des bétons bitumineux comprenant ce liant.

Les liants bitumineux sont notamment utilisés dans les domaines des chaussées, des matériaux de toitures, des revêtements, de l'étanchéité. On peut d'ailleurs citer l'utilisation de l'asphalte pour la réalisation des chaussées.

Au sens de la présente invention, on entend par liant bitumineux les bitumes et/ou toutes les compositions à base de bitumes. Par liant bitumineux, on entend ainsi au sens de la présente invention aussi bien un liant à base de bitume pur que des liants contenant tout type d'additifs habituels, notamment des polymères. Dans le cadre de la présente invention, on parlera indifféremment de liant ou de liant bitumineux.

En général, les bétons bitumineux comprennent un liant bitumineux et des agrégats ou des charges minérales. Il peut s'agir notamment de granulats ou cailloux, de sable, et de fines. Les bétons bitumineux peuvent aussi être appelés enrobés bitumineux.

Toutefois, de tels liants présentent de nombreux inconvénients lorsqu'ils sont utilisés en tant que tels pour différentes applications : on peut citer notamment une sensibilité importante à la température, une adhérence limitée vis à vis des agrégats, des propriétés médiocres à basses températures, une faible résistance à la fatigue et aux chocs.

De plus les liants bitumineux sont difficiles à manipuler, et nécessitent des technologies spécifiques.

Ainsi dans le cas d'une chaussée, notamment dans le cas de la couche de roulement d'une chaussée ou route, les constituants principaux sont des bétons bitumineux qui sont constitués d'environ 95 % en masse de granulats et d'environ 5 % en masse de bitume qui sert de liant. Dans ce cas le rôle du bitume en tant que liant est prépondérant sur les propriétés de la route qui est soumise à diverses contraintes d'origine mécanique : fracture thermique, fatigue et orniérage.

En effet à basse température, inférieure à environ -10° C, le liant, évolue vers un état vitreux et devient cassant. Il peut alors se former de longues fissures transversales dues aux contraintes thermiques, dites fractures thermiques.

A plus haute température, aux alentours de 0° C, la chaussée peut toujours se fissurer sous l'effet de la fatigue. Il en résulte une multitude de fissures, principalement longitudinales, interconnectées.

Enfin, à des températures plus élevées, supérieures ou égales à environ 60°C, le liant devient de plus en plus fluide et passe d'un état viscoélastique à un état visqueux newtonien, avec une viscosité de plus en plus faible. Aussi le passage répété de masses élevées, que constituent les véhicules, dont les poids-lourds, sur la chaussée contribue à déformer l'enrobé et donc le liant bitumineux de façon permanente et donc à déformer la chaussée. Ce phénomène est à l'origine des ornières.

Le liant assure en outre l'imperméabilisation de la chaussée, protégeant ainsi les soubassements de la route.

Les principales caractéristiques demandées à la chaussée d'une route et donc aux liants bitumineux sont donc une bonne résistance aux fissurations à basse température, typiquement à des températures inférieures ou égales à environ -15° C, et une faible déformation à haute température, typiquement à des températures supérieures ou égales à environ 60° C, et une bonne résistance à la fatigue pour améliorer la durabilité.

Les industriels utilisent généralement des additifs pour palier aux déficiences des liants bitumineux et ainsi améliorer leurs propriétés, notamment leurs propriétés rhéologiques.

Notamment, il est connu d'ajouter à ces liants bitumineux des acides minéraux ou des composés phosphorés. Par exemple, la demande de brevet internationale WO 98/44047 décrit un mélange de bitume, de polymères et d'acide polyphosphorique. L'ajout d'acide permet d'améliorer les propriétés viscoélastiques du liant bitumineux à des températures basses et à des températures élevées. De plus, cet ajout d'acide permet de conserver de bonnes propriétés du mélange pour une quantité en polymères ajoutée plus faible. Selon la demande de brevet internationale WO 96/28513, un traitement d'un mélange de bitume additivé de polymères par un adjuvant de type acide permet de promouvoir les liaisons chimiques entre le bitume et les polymères.

La demande de brevet WO 95/28446 décrit des compositions bitume-polymère réticulé obtenus par mélange d'un bitume avec un elastomère réticulable au soufre et un agent de couplage donneur de souffre suivi de l'ajout après réticulation du polymère d'un adjuvant minéral du type acide ou anhydride d'acide. Toutefois, dans ce document, l'elastomère utilisé n'est pas déjà réticulé avant son mélange dans le bitume et la réticulation a donc lieu au sein du bitume.

Il est aussi connu d'ajouter à ces liants bitumineux des poudrettes de caoutchouc vulcanisées. Par exemple, la demande de brevet française FR 2 764 897 décrit un mélange de bitume, de poudrettes de caoutchouc et de copolymères utilisé comme liant routier. La demande de brevet française FR 2 732 702 décrit un mélange de bitume, de poudrettes de caoutchouc et de catalyseurs de digestions, qui sont des polymères synthétiques à insaturation oléfiniques, tels que les copolymères de type SBS, SBR, EVA, EMA, EPDM et le caoutchouc nitrile. La demande française FR 2 657 447 décrit un procédé de préparation d'un mélange bitume-caoutchouc.

L'introduction de caoutchouc dans des bitumes permet d'améliorer les propriétés des enrobés, de donner une plus grande souplesse aux revêtements réalisés, d'améliorer leur résistance à la fatigue aux basses températures, et de diminuer les phénomènes de bruit et de réflexions de sources lumineuses. L'utilisation de caoutchouc de récupération à cet effet permet de plus, de contribuer à l'élimination de pneus usés d'origines diverses.

Les poudrettes de caoutchouc peuvent être utilisées soit comme poudres ajoutées au mélange sable et granulats, on parle alors d'incorporation par voie « sèche »; soit incorporées à chaud directement dans le liant, on parle alors d'incorporation par voie « humide ». Les propriétés obtenues sont alors différentes, selon la technologie utilisée.

L'incorporation de la poudrette de caoutchouc dans le bitume à chaud permet ainsi de modifier les propriétés du liant.

Cependant l'utilisation de ces poudrettes de caoutchouc est peu aisée car ces produits doivent être utilisés à des taux relativement élevés, ce qui pose des problèmes d'incorporation dans le bitume et de viscosité du bitume ainsi additivé.

D'une manière surprenante, la Demanderesse a découvert que l'incorporation dans le bitume de poudrettes de caoutchouc et d'acide permet d'améliorer les propriétés du liant bitumineux, notamment ses propriétés rhéologiques.

D'une manière surprenante, la Demanderesse a découvert une synergie entre l'acide et les poudrettes de caoutchouc.

La présente invention a donc pour objet un procédé de préparation d'un liant bitumineux comprenant les étapes successives suivantes de :

a)- mélange de 0,05 à 5 % en poids d'acide, de 0,5 à 25 % en poids de poudrettes de caoutchouc et de 70 à 99,5 % en poids de bitume chauffé à une température comprise entre 120 et 220°C,

b)- chauffage du mélange à une température comprise entre 120 et 220°C pendant un temps compris entre 15 minutes et 10 heures, avantageusement entre 15 minutes et 3 heures, sous agitation, et

c)- le cas échéant, dégazage des bulles d'air éventuellement présentes dans le mélange.

Au sens de la présente invention, on entend par acide tout acide de Bronsted et de Lewis. Il peut s'agir d'acides minéraux ou organiques.

Au sens de la présente invention, on entend par acide minéral l'acide chlorhydrique, nitrique, sulfurique, phosphoreux, hypophosphorique, phosphorique, polyphosphorique, sulfonique ou les sels métalliques de ces acides, tels que notamment les nitrates, sulfates, chlorures de fer, cerium, cuivre, aluminium par exemple.

Au sens de la présente invention, on entend par acide organique les acides mono ou polycarboxyliques ayant un nombre d'atomes de carbone compris entre 1 et 22, notamment l'acide tartrique, l'acide citrique, l'acide oxalique, l'acide sulfonique, l'acide adipique, avantageusement ayant un nombre d'atomes de carbone supérieur à 8, les acides organophosphates, les acides organophosphonates, notamment les acides alkylphosphoniques (OPA), les acides organophosphinates, les amino-acides, les acides amino phosphoniques (AMPA), les acides amino phosphoriques, les acides aminophosphiniques, les acides carbamiques, les acides organothiophosphoriques, les acides organothiophosphoniques, les acides organothiophosphiniques, les thioic acides.

Avantageusement, l'acide utilisé est un acide sulfurique, un acide phosphorique, un acide polyphosphorique ou un acide organophosphate. Encore plus avantageusement, l'acide ajouté est un acide phosphorique ou un acide polyphosphorique.

Avantageusement l'acide phosphorique est l'acide orthophosphorique, encore appelé acide monophosphorique, de la formule $H_3PO_4$. Les acides polyphosphoriques selon l'invention peuvent être choisis parmi ceux décrits dans le livre intitulé «Phosphorus an outline of its Chemistry, Biochemistry and Uses », fifth Edition, D.E.C. Corbridge, Elsevier, 1995 pages 170 et 180 à 182.

L'acide polyphosphorique est choisi avantageusement parmi l'acide pyrophosphorique ou acide disphophorique de formule $H_4P_2O_7$, l'acide triphosphorique de formule $H_5P_3O_{10}$, les acides polyphosphoriques de formule $H_{n+2}P_nO_{3n+1}$, les acides métaphosphoriques de formule $H_nP_nO_{3n}$ ou leurs mélanges.

Comme indiqué à la page 181 du document « Phosphorus an outline of its Chemistry, Biochemistry and Uses » mentionné ci-dessus, l'acide phosphorique ou les acides polyphosphoriques commerciaux sont caractérisés par leur équivalent en $P_2O_5$ ou $H_3PO_4$ exprimés en pourcentage par rapport au poids de l'acide.

Ainsi il existe une classe d'acides dits superphosphoriques dont l'équivalent en $H_3PO_4$ est supérieur à 100. Ces acides superphosphoriques sont les acides polyphosphoriques les plus avantageux.

Les acides peuvent être utilisés sous forme libre ou sous la forme de sels.

Les acides peuvent être sous forme liquide ou solide. Lorsque les acides sont sous forme liquide, il est possible de les mettre sous forme d'une poudre par imprégnation d'un support minéral poreux dans le cas de l'acide ortho ou polyphosphorique. Le support minéral poreux est un solide minéral de grande porosité, avantageusement son volume est d'au moins 1ml/g, encore plus avantageusement d'au moins 3ml/g. Il est notamment choisi parmi les silices, les alumines, les silicoaluminates.

L'avantage du composé à base d'acide phosphorique ou polyphosphorique supporté sur un solide minéral de grande porosité est qu'il est sous forme de poudre ou granulés et donc est très facilement manipulable par rapport aux solutions d'acides liquides qui sont très visqueuses.

Un autre avantage de ce composé est qu'il permet de renforcer les produits bitumineux dans lesquels il est incorporé, notamment au niveau de la rigidité à haute température.

Enfin ce composé conserve les mêmes propriétés que celles des acides phosphoriques ou polyphosphoriques.

Selon une variante avantageuse de l'invention, la quantité en poids d'acide ajoutée dans le mélange à l'étape a) est comprise entre 0,5 et 2% en poids par rapport au poids total du mélange.

Les poudrettes de caoutchouc peuvent être obtenues à partir de caoutchouc naturel ou de synthèse, du type styrène-butadiène, ou par broyage notamment de pneumatiques, de tapis de sol ou de semelles de chaussures.

Comme exemples de compositions de poudrettes de caoutchouc, on donne les compositions approximatives suivantes :

|  | Véhicules légers | Poids lourds |
|---|---|---|
| Caoutchouc/élastomères | 48% | 45% |
| Noir de carbone/silice | 22% | 22% |
| Métal | 15% | 25% |
| Textile | 5% | - |
| Oxyde de zinc | 1% | 2% |
| Soufre | 1% | 1% |
| Autres additifs divers | 8% | 5% |

Le métal et le textile ont bien évidemment été éliminés des poudrettes de caoutchouc après broyage.

La différence essentielle entre les différents types de poudrettes réside dans la nature des caoutchoucs qui peuvent être un ou plusieurs élastomères de synthèse, tels que le polybutadiène, le SBR, pouvant être associés à du caoutchouc naturel dans le cas des pneus de véhicules légers, ou du caoutchouc naturel dans le cas des pneus des poids lourds.

Une analyse DSC, calorimétrie différentielle, de grains de poudrettes montre des températures de transition vitreuse assez constante et de l'ordre de -60°C sur des poudrettes issues de pneus de poids lourds, plus variables, entre -35 et -100°C, sur des poudrettes issues de pneus de véhicules légers; cette dispersion est vraisemblablement due à la diversité des élastomères utilisés.

La granulométrie est définie par les usines de broyage qui proposent un grand nombre de fuseaux selon les utilisations envisagées. Les fuseaux les plus courants correspondent à une granulométrie comprise entre 0,5 et 1,5 mm, 1 et 2 mm, 1 et 3 mm, 1 et 4 mm, 1 et 5 mm, 1 et 6 mm, 1 et 7 mm.

Dans le cadre de la présente invention, les poudrettes de caoutchouc ont un diamètre inférieur à 5 mm, avantageusement le diamètre des poudrettes de caoutchouc est compris entre 0,0001 et 2 mm, encore plus avantageusement il est inférieur à 1,5 mm.

Selon une variante avantageuse de l'invention, la quantité en poids de poudrettes de caoutchouc ajoutée dans le mélange à l'étape a) est comprise entre 1 et 10% en poids par rapport au poids total du mélange, encore plus avantageusement entre 3 et 7% en poids par rapport au poids total du mélange.

La quantité totale de bitume ajoutée au mélange correspond au poids total du mélange moins le poids des quantités d'acide et de poudrettes de caoutchouc ajoutées.

Au sens de la présente invention, on entend par bitume aussi bien toute composition de bitume pur que toute composition à base de bitume contenant tout type d'additifs habituels, notamment des polymères.

Selon une autre variante avantageuse de l'invention, le bitume, ajouté lors de l'étape a), est chauffé à une température comprise entre 140 et 190°C.

Le mélange obtenu suite à l'étape b) est ensuite avantageusement chauffé à une température comprise entre 140°C et 190°C.

Le nouveau procédé se déroule dans des conditions plus douces que les procédés à chaud de l'art antérieur, dans lesquels il fallait fortement chauffer le bitume pour faciliter le gonflement des poudrettes. Ceci permet en outre de limiter les phénomènes d'oxydation du bitume et de raccourcir les temps d'homogeneisation d'un mélange polymère-bitume classique.

Selon une variante avantageuse de l'invention, l'étape a) est réalisée par mélange du bitume et de l'acide suivi de l'ajout des poudrettes de caoutchouc.

Selon une autre variante avantageuse de l'invention, l'étape a) est réalisée par le pré-mélange de l'acide et des poudrettes de caoutchouc avant leur ajout dans le bitume.

Selon une autre variante avantageuse de l'invention, l'étape a) est réalisée par mélange d'au moins une partie du bitume et des poudrettes de caoutchouc suivi de l'ajout de l'acide et la cas échéant de l'addition finale de la quantité restante de bitume.

La présente invention a aussi pour objet un liant bitumineux susceptible d'être obtenu par le procédé, tel que décrit précédemment.

Le rapport de viscosité, à 135°C, entre un liant bitumineux comprenant des poudrettes de caoutchouc mais pas d'acide, dit liant sans acide, et un liant bitumineux selon l'invention, dit liant contenant de l'acide, est compris entre 10 et 70%, avantageusement entre 10 et 50 %. Le bitume utilisé pour la fabrication du liant sans acide et pour celle du liant avec acide est identique, notamment, il comprend les mêmes additifs, tels que des polymères, mis à part l'acide. Le liant bitumineux selon l'invention est moins visqueux qu'un liant sans acide, à température égale.

La différence de température critique entre liant bitumineux comprenant des poudrettes de caoutchouc mais pas d'acide, dit liant sans acide, et un liant bitumineux selon l'invention, dit liant contenant de l'acide, est comprise entre 1 et 50°C, avantageusement entre 1 et 25°C. Le bitume utilisé pour la fabrication du liant sans acide et pour celle du liant avec acide est identique, notamment, il comprend les mêmes additifs, tels que des polymères, mis à part l'acide. Le liant bitumineux selon l'invention présente une température critique plus élevée que celle du liant sans acide, la température critique étant mesurée selon le même mode opératoire.

La température critique, qui est définie dans la norme AASHTO, peut être mesurée soit selon un mode opératoire dit à chaud soit selon un mode opératoire dit à froid.

La détermination de la température critique selon un mode opératoire à chaud est décrite dans la norme HTPP5-98 ou EN1427. On mesure alors la température de ramollissement (appelée température critique) selon le test appelé TBA, soit Ring and Ball Test.

La détermination de la température critique selon un mode opératoire à froid est décrite dans la norme HTPP1-98 ou (AASHTO. On mesure alors la température de déformation sous contrainte selon le test appelé BBR, soit Bending Beam Rheometer.

Le procédé selon l'invention permet l'obtention d'un liant bitumineux qui contient un plus faible pourcentage de poudrettes de caoutchouc et qui présente les mêmes propriétés, notamment rhéologiques, qu'un liant bitumineux de l'art antérieur comprenant un plus fort pourcentage de poudrettes de caoutchouc.

Le liant bitumineux selon l'invention peut également être préparé sous forme d'un mélange-maître avec des concentrations plus fortes en acide et en poudrettes de caoutchouc et par la suite dilué à chaud avec du bitume pur et/ou avec un liant bitumineux quelconque, de façon à obtenir un liant bitumineux présentant les concentrations en acide et en poudrettes de caoutchouc recherchées ainsi que les propriétés, notamment rhéologiques, désirées.

Le liant bitumineux selon l'invention peut être utilisé dans des matériaux de construction, notamment des matériaux de toiture. Il peut également être utilisé comme agent d'étanchéité, comme enduit superficiel ou comme système anti-remontée de fissures.

Le liant selon l'invention peut être utilisé comme bitume polymère, dans la fabrication de béton bitumineux à chaud ou à froid utilisable notamment comme couche de roulement ou basse, comme enduit superficiel ou comme système anti-remontée de fissures.

La présente invention a également pour objet un béton bitumineux comprenant le liant selon l'invention et la quantité nécessaire de granulats.

La présente invention a également pour objet un procédé de préparation d'un tel béton bitumineux.

Selon une variante avantageuse de l'invention, le béton bitumineux est préparé selon un procédé à chaud. Les granulats sont ajoutés au liant selon l'invention, sous agitation, à une température comprise entre 120 et 220°C. Avantageusement, les granulats sont ajoutés au liant sous agitation à une température comprise entre 120 et 190°C.

Selon une variante avantageuse de l'invention, le béton bitumineux est préparé selon un procédé à froid. Le procédé de préparation à froid du béton bitumineux comprend les étapes suivantes :

i) préparation d'une émulsion de bitume en mélangeant de l'eau, un liant bitumineux selon l'invention et un émulsifiant à température ambiante,
ii) incorporation de granulats dans l'émulsion de bitume, obtenue à l'étape i), sous agitation à température ambiante,
iii) on épand l'émulsion obtenue à l'étape ii) pour obtenir une couche uniforme du mélange obtenu à l'étape ii),
iv) on casse l'émulsion de bitume.

Tout type d'émulsifiant peut être utilisé dans l'étape i).

Selon une variante de l'invention, les poudrettes de caoutchouc, éventuellement pré-mélangées à l'acide, sont introduites en même temps que les granulats dans le bitume, comprenant éventuellement l'acide.

De préférence, les granulats sont introduits ultérieurement au mélange bitume-poudrettes de caoutchouc-acide, c'est-à-dire dans le liant selon l'invention.

Le béton selon l'invention est utilisé pour la fabrication de chaussées, notamment de la couche de roulement d'une chaussée ou d'une route.

Il peut également être utilisé comme enduit superficiel ou comme système anti-remontée de fissures.

La présente invention a également pour objet l'utilisation d'un acide pour faciliter l'incorporation de poudrettes de caoutchouc dans un liant bitumineux.

La présente invention concerne également un prémélange contenant entre 0,02 % et 91 % en poids d'acide et entre 9 % et 99,98 % en poids de poudrette de caoutchouc. Avantageusement, il contient entre 5 % et 50 % en poids d'acide et entre 50 % et 95 % en poids de poudrette de caoutchouc. De façon avantageuse, il contient entre 10 et 20 % en poids d'acide et entre 80 % et 90 % en poids de poudrette de caoutchouc. Avantageusement, ce prémélange est utilisé dans le procédé de préparation de liant bitumineux selon la présente invention.

Les exemples suivants illustrent l'invention sans toutefois en limiter la portée.

### Exemple 1 : Préparation des bitumes additivés

Le bitume est placé dans un bécher. Le bécher est alors chauffé à l'aide d'une plaque chauffante jusqu'à 170°C jusqu'à ce qu'il soit totalement liquide.

L'incorporation de l'additif est ensuite effectuée. L'additif peut être tout additif ajouté habituellement, notamment un polymère, et/ou poudrettes de caoutchouc vulcanisé et/ou de l'acide.

Le mélange est maintenu à 170°C environ pendant 120 minutes sous agitation à l'aide d'un agitateur rotatif à 300 tours/min. La température est maintenue strictement en dessous de 180°C, afin de ne pas altérer les caractéristiques du bitume.

Après le malaxage, le mélange est maintenu 10 minutes à environ 170°C sous brassage à vitesse lente afin d'éliminer les bulles d'air qui auraient pu se former.

Le mélange est alors terminé, et prêt à être utilisé.

### Exemple 2: Détermination des propriétés rhéologiques d'un bitume SHELL 70/100 additivé.

Un bitume de grade 70/100 (grade Pen), a été utilisé pour les essais. Il s'agit d'un bitume de provenance de la Société SHELL, située à Petit Couronne en France.

### 1/ Essais de rhéologie

La déformation à chaud est un facteur déterminant qui doit être pris en compte dans une formulation d'enrobés bitumineux. Les spécifications sur les liants sont conçues de manière à ce que les enrobés correspondants aient une bonne tenue à l'orniérage. En Europe, les propriétés des liants à haute température sont évaluées par le point de ramolissement bille-anneau (TBA). Aux Etats-Unis, le SHRP a développé un critère basé sur le ratio module complexe/ angle de phase, évalué au travers d'un essai de rhéologie : essai DSR (Dynamic Shear Rheometer).

La caractérisation rhéologique du bitume additivé est faite selon une procédure dérivée des normes SHRP (AASHTO TP5-98).

Le domaine de fréquence utilisé va de 7,8 Hz à 200 Hz, pour un domaine de température variant entre 25°C et 60°C.

Les essais de rhéologie sont réalisés en cisaillement annulaire, à l'aide d'un viscoélasticimètre Metravib RDS VA 2000.

Le bitume liquide est introduit dans la cellule de cisaillement, préalablement chauffée à 110°C. Lorsque la température est descendue vers 45°C, le bitume ne coule plus et l'ensemble de la structure est alors serré et prêt pour les mesures.

L'échantillon de bitume a une épaisseur de 1 mm.

Les essais sont réalisés à différentes températures, à 30, 40, 50 et 60°C, et dans un domaine de fréquences permettant de mettre en évidence le comportement du matériau, soit à 7,8 - 15,6 - 31,2 - 62,5 - 125 et 200 Hz.

### 2/ Propriétés rhéologiques du bitume modifié en présence de polymère sous forme de caoutchouc vulcanisé.

Les résultats obtenus concernent le module complexe. $G^*$, les composantes élastiques $G'$ et visqueuses $G''$ du module, et l'angle de phase $\delta$.

Ces résultats peuvent être représentés soit à iso-fréquence (isochrones) en fonction de la température, soit à iso-température (isothermes) en fonction de la fréquence.

Dans cet exemple, les modes de préparation du bitume et les essais de rhéologie ont été menés tels que décrits précédemment.

La poudrette de caoutchouc vulcanisé est une poudre obtenue par cryobroyage à partir de pneumatiques poids-lourds : granulométrie D max < 500 microns (Micronis).

Le polymère SBS (SBS linéaire) est une poudre micronisée : D1101 Kraton.

L'acide polyphosphorique (APP) utilisé est un acide condensé à 105 % (Rhodia).

Quatre produits ont été comparés :

i) Bitume de référence Shell 70/100 sans additif;

ii) et iii) Bitume additivé poudrette caoutchouc vulcanisé : 5% , et 10% poids.

iv) Bitume additivé poudre styrène butadiène styrène (SBS) : 3% poids.

Le tableau 1 suivant rassemble les valeurs mesurées à 60°C, pour une fréquence de 7,8 Hz.

Tableau 1 :

|  | G* ($10^3$Pa) | G' ($10^3$Pa) | G'' ($10^3$Pa) | $\delta$ |
|---|---|---|---|---|
| Shell 70/100 | 10,275 | 0,950 | 10,400 | 85,2 |
| Shell + 5% Caoutchouc | 13,630 | 1,593 | 13,540 | 83,2 |
| Shell + 10% Caoutchouc | 20,605 | 3,495 | 20,310 | 80,25 |
| Shell + 3% SBS | 20,460 | 4,370 | 19,985 | 77,5 |

On voit clairement l'effet de renforcement, c'est-à-dire de rigidification, apporté par l'additif poudrette de caoutchouc vulcanisé ou SBS. En effet, on observe une augmentation du module complexe G*, et surtout de la composante visqueuse G'', en présence de 10% en poids de poudrette de caoutchouc vulcanisé ou bien de SBS.

L'angle de phase $\delta$ est sensiblement réduit, ce qui traduit un comportement plus élastique du bitume additivé de poudrette de caoutchouc vulcanisé ou de SBS.

L'ajout de 10% en poids de poudrette de caoutchouc vulcanisé conduit à un bitume modifié avec un comportement élastique nettement marqué, très voisin de celui obtenu avec 3% en poids de SBS.

Le tableau 2 suivant rassemble les valeurs de module G* à 25°C, et l'angle de phase $\delta$ à 40°C, ainsi que la température critique Tc pour une fréquence de 7,8 Hz.

La température critique Tc est déterminée selon un critère inspiré de la procédure SHRP. Tc est la température pour laquelle le rapport G*/sin $\delta$ est supérieur à 1100 Pa. La susceptibilité thermique du bitume est déterminée par un indice I.S., qui est l'indice de susceptibilité thermique. I.S. est défini par la pente, appelée a, de la droite log G* = f(T) à 7,8 Hz.

On a l'équation suivante :

$$\frac{20-IS}{10+IS} = 50.|a|$$

Tableau 2 :

|  | G* $25°C$ ($10^6$ Pa) | G' $25°C$ ($10^6$ Pa) | G'' $25°C$ ($10^6$ Pa) | $\delta$ $40°C$ | Tc (°C) | I.S. |
|---|---|---|---|---|---|---|
| Shell 70/100 | 3,5 | 1,5 | 3,25 | 78,5 | 72,25 | - 3,60 |
| Shell + 5% poudre caoutchouc) | 2,55 | 1,43 | 2,12 | 72 | 76,3 | -3,00 |
| Shell + 10% poudre caoutchouc | 5,50 | 3,12 | 4,50 | 67,1 | 77,25 | - 3,25 |
| Shell + 3% poudre SBS | 2,80 | 1,32 | 2,48 | 70,6 | 80,9 | - 2,58 |

La température critique Tc est nettement augmentée en présence de la poudrette de caoutchouc vulcanisé, et ceci dès l'ajout de 5% en poids de poudrette de caoutchouc vulcanisé.

De même, on constate une baisse sensible de la susceptibilité thermique IS dès l'ajout de 5% en poids de poudrette de caoutchouc vulcanisé.

L'angle de phase $\delta$, à une température de 40°C, est fortement réduit, ce qui traduit un comportement plus élastique du bitume additivé. Cet effet est d'autant plus marqué que la teneur en poudrette de caoutchouc vulcanisé est importante.

On note un gain important des modules, c'est-à-dire du module complexe G*, du module élastique G' et du module visqueux G", à température ambiante, 25°C, pour l'ajout de 10% en poids de poudrette de caoutchouc vulcanisé.

3/ Propriétés rhéologiques du bitume modifié acide polyphosphorique en présence de polymère sous forme de caoutchouc vulcanisé.

Les résultats obtenus concernent le module complexe G*, les composantes élastiques G' et visqueuses G", et l'angle de phase δ, en fonction de la fréquence et de la température. Dans cet exemple, on a utilisé le bitume Shell comme dans l'exemple précédent, les modes de préparation du bitume et les essais de rhéologie ont été menés tels que décrits précédemment.

Deux produits ont été comparés :

i) Bitume de référence Shell 70/100 sans additif;

ii) Bitume modifié 1% en poids d' acide polyphosphorique (APP) et additivé de 5% en poids de poudrette de caoutchouc vulcanisé.

Le tableau 3 suivant rassemble les valeurs mesurées à 60°C, pour une fréquence de 7,8 Hz.

Tableau 3 :

|  | G* ($10^3$Pa) | G' ($10^3$Pa) | G" ($10^3$Pa) | δ |
|---|---|---|---|---|
| Shell 70/100 | 10,275 | 0,950 | 10,400 | 85,2 |
| Shell + 1% Acide APP + 5% Poudre caoutchouc | 23,828 | 5,463 | 23,193 | 76,75 |

La présence d'acide polyphosphorique (1% en poids) permet de réduire fortement la teneur en poudre de caoutchouc tout en maintenant les performances.

Ainsi, l'ajout de 5% en poids de poudrette de caoutchouc vulcanisé en présence d'acide polyphosphorique (1% en poids d'APP) permet d'obtenir des propriétés rhéologiques nettement améliorées. On observe ainsi une augmentation des modules, G' et G", et une réduction importante de l'angle de phase δ. Cela montre clairement l'effet de renforcement, c'est-à-dire de rigidification, apporté par l'additif poudrette de caoutchouc vulcanisé associé à l'acide polyphosphorique. Le comportement du bitume additivé est ainsi nettement plus élastique, c'est à dire moins sensible aux déformations irréversibles. Les performances obtenues à 60°C avec 1% en poids d'acide polyphosphorique et 5% en poids de poudrettes de caoutchouc vulcanisé sont supérieures à celles mesurées avec 3% en poids de polymère SBS.

Le tableau 4 suivant rassemble les valeurs de module G* à 25°C, et l'angle de phase δ à 40°C, ainsi que la température critique Tc pour une fréquence de 7,8 Hz.

La température critique Tc est déterminée selon le critère inspiré de la procédure SHRP. Tc est la température pour laquelle le rapport G*/sin δ est supérieur à 1100 Pa.

La susceptibilité thermique du bitume est déterminée par l'indice I.S., indice de susceptibilité thermique.

Tableau 4 :

|  | G* *25°C* ($10^6$ Pa) | G' *25 °C* ($10^6$ Pa) | G" *25°C* ($10^6$ Pa) | δ *40°C* | Tc (°C) | I.S. |
|---|---|---|---|---|---|---|
| Shell 70/100 | 3,5 | 1,5 | 3,25 | 78,5 | 72,25 | -3,60 |
| Shell + 1% Acide APP + 5% poudre caoutchouc | 5,2 | 3,02 | 4,24 | 66,5 | 79,0 | -3,05 |

Les propriétés élastiques à température ambiante, 25°C, sont fortement augmentées : le module complexe G*, et les modules G', G" sont beaucoup plus élevés.

La température critique Tc est fortement augmentée par l'association acide polyphosphorique (1% en poids) et poudrette de caoutchouc vulcanisé (5% en poids). De même, on constate une baisse sensible de la susceptibilité thermique IS, dans le cas du bitume additivé acide polyphosphorique (1% en poids) et poudrette de caoutchouc vulcanisé (5% en poids).

L'angle de phase δ, à 40°C, est très fortement réduit dans le cas du bitume additivé acide polyphosphorique (1% en poids) et poudrettes de caoutchouc vulcanisé (5% en poids), ce qui traduit un comportement plus élastique du bitume additivé. Cet angle est plus faible que celui obtenu dans le cas du bitume additivé avec 3% en poids de poudre de polymère SBS.

L'additivation du bitume par un mixte acide polyphosphorique (1%) et poudrettes de caoutchouc vulcanisé (5% en poids) permet d'atteindre les performances des bitumes modifiés polymère (BmP) contenant 3% en poids de polymère SBS.

L'utilisation d'acide polyphosphorique (1% en poids) permet de réduire fortement la teneur en poudrette de caoutchouc vulcanisé à ajouter tout en conservant les propriétés du bitume obtenu : les propriétés sont améliorées comparativement au même bitume additivé avec 10% en poids de poudrette de caoutchouc vulcanisé.

Cette réduction du taux de poudrette de caoutchouc vulcanisé permet d'améliorer de façon sensible la rhéologie du bitume liquide à 160°C.

4/ Viscosité Brookfield du bitume modifié acide polyphosphorique en présence de polymère sous forme de caoutchouc vulcanisé.

La viscosité Brookfield des bitumes et bitumes additivés préparé tels que décrits précédemment est mesurée entre 120°C et 160°C.

Cinq produits ont été comparés :

i) Bitume dé référence Shell 70/100 sans additif

ii) Bitume modifié 1 % en poids d'acide polyphosphorique (APP)

iii) et iv) Bitume additivé de poudrette de caoutchouc vulcanisé : 5 % et 10 % en poids,

iv) Bitumé modifié 1 % en poids d'acide polyphosphorique et 5 % en poids de poudrette de caoutchouc vulcanisé

Les valeurs de viscosité à 135°C sont reportées dans le tableau 5.

Tableau 5 :

|  | Viscosité Brookfield η (cPs) |
|---|---|
| Shell 70/100 | 480 |
| Shell + 1% Acide APP | 690 |
| Shell + 10% poudre caoutchouc | 1500 |
| Shell + 5% poudre caoutchouc | 945 |
| Shell + 1% Acide APP + 5% poudre caoutchouc | 1075 |

La viscosité du bitume additivé est fortement augmenté par l'ajout de 10% en poids de poudrette de caoutchouc vulcanisé.

On voit clairement l'intérêt de la présence d'acide polyphosphorique (1% en poids) : la combinaison 1% en poids d'acide polyphosphorique + 5% en poids de poudrette caoutchouc vulcanisé confère au bitume une viscosité intéressante.

**Exemple 3 : Détermination des propriétés rhéologiques d'un bitume PROA8 80/100 additivé.**

Un bitume de grade 80/100 (grade Péné), a été utilisé pour ces essais. Il s'agit d'un bitume de provenance de la société PROAS, située en Espagne.

1/ Additifs évalués et préparation du bitume additivé

Quatre grades de poudrettes caoutchouc vulcanisé ont été comparées.

Grade 1 : D max < 500 microns (Mesallés)
Grade 2 : Dmax < 800 microns (Necaflex)
Grade 3 : Dmax < 400 microns (Necaflex)
Grade 4 : Dmax < 400 microns (Necaflex)

Les grades 1 , 2, et 3 ont été obtenus par broyage mécanique. Le grade 4 a été obtenu par cryobroyage.

L'acide polyphosphorique (APP) utilisé est un acide condensé à 105% (Rhodia).

Les mélanges bitume / poudrette de caoutchouc / acide ont été réalisés à chaud (170°C) sous agitation pendant 120 minutes (comme indiqué dans l'exemple 1).

2/ Essais de rhéologie

La caractérisation rhéologique du bitume additivé est faite selon la procédure SHRP (AASHTO TPS-98) : essais DSR, Dynamic Shear Rheometer.

Les essais de rhéologie sont réalisés en cisaillement annulaire, à l'aide d'un viscoélasticimètre Metravib RDS VA 2000. Le domaine de fréquence utilisé va de 1,5 Hz à 125 Hz, pour un domaine de température variant entre 25°C et 60°C.

Le bitume liquide est introduit dans la cellule de cisaillement, préalablement chauffée à 110°C. Lorsque la température est descendue vers 45°C, le bitume ne coule plus et l'ensemble de la structure est alors serré et prêt pour les mesures.

L'échantillon de bitume a une épaisseur de 1 mm.

Les essais sont réalisés à différentes températures, à 25, 30, 40, 50 et 60°C, et dans un domaine de fréquences permettant de mettre en évidence le comportement du matériau, soit à 1,5 - 7,8 - 15,6 - 31,2 - 62,5 - et 125 Hz.

3/ Propriétés rhéologiques du bitume modifié acide polyphosphorique en présence de poudrette de caoutchouc vulcanisé. Effet du taux de poudrette de caoutchouc vulcanisé et du taux d'acide polyphosphorique (poudrette Grade 1)

Les résultats obtenus concernent le module de Coulomb, encore dénommé module complexe, $G^*$, les composantes élastiques $G'$ et visqueuses $G''$, et l'angle de phase $\delta$.

Les modes de préparation du bitume et les essais de rhéologie ont été menés tels que décrits précédemment.

Cinq produits ont été comparés :

i) Bitume de référence (Proas 80/100) sans additif;
ii) Bitume modifié acide polyphosphorique : 1 % poids.
iii) Bitume additivé poudrette caoutchouc vulcanisé (Grade 1) : 10% poids.
iv) Bitume modifié acide polyphosphorique (1% en poids) et additivé poudrette de caoutchouc vulcanisé (5% en poids).
v) Bitume modifié acide polyphosphorique (0,5% en poids) et additivé poudrette de caoutchouc vulcanisé (5% en poids).

Le tableau 6 suivant rassemble les valeurs de module $G^*$ à 25°C, et l'angle de phase $\delta$ à 40°C, ainsi que la température critique Tc pour une fréquence de 1,5 Hz.

Tableau 6 :

|  | $G^*$ -25°C $10^6$ Pa | $G^*$ -60° $10^3$ Pa | $\delta$ -40°C(Pa) | Tc (°C) |
|---|---|---|---|---|
| Bitume Proas 80/100 | 0,31 | 1,935 | 76,05 | 64,4 |
| Bitume + 1 % Acide Polyphosphorique | 0,64 | 7,733 | 60,89 | 76,1 |
| Bitume + 10% Poudrette caoutchouc (Grade 1) | 0,776 | 11,307 | 56,73 | 79,5 |
| Bitume + 1% Acide Polyphosphorique + 5% Poudrette caoutchouc | 0,736 | 13,891 | 53,70 | 83,1 |
| Bitume + 0,5% Acide Polyphosphorique + 5% Poudrette caoutchouc | 0,913 | 8,532 | 60,06 | 75,1 |

On voit clairement l'effet de renforcement, c'est-à-dire de rigidification, apporté par l'additif poudrette caoutchouc. En effet, on observe une augmentation du module complexe $G^*$, en présence de 10% en poids de poudrette de caoutchouc vulcanisé.

L'angle de phase $\delta$ est sensiblement réduit, ce qui traduit un comportement plus élastique du bitume additivé.

La température critique Tc est nettement augmentée en présence de la poudrette de caoutchouc vulcanisé, et ceci dès l'ajout de 5% en poids de poudrette.

L'angle de phase δ, à une température de 40°C, est fortement réduit, ce qui traduit un comportement plus élastique du bitume additivé.

Les meilleures performances sont obtenues avec 1% en poids d'acide polyphosphorique + 5% en poids de poudrette de caoutchouc vulcanisé.

Le tableau 7 rassemble les valeurs de module G* à 25°C, ainsi que l'indice de susceptibilité thermique IS.

Tableau 7 :

|  | G* -25°C $10^5$ Pa | G' -25° $10^5$ Pa | G" -25°C $10^5$ Pa | IS |
|---|---|---|---|---|
| Bitume Proas 80/100 | 3,19 | 1,17 | 2,97 | - 2,82 |
| Bitume + 1% Acide Polyphosphorique | 6,43 | 3,60 | 5,33 | -1,98 |
| Bitume + 10% Poudrette caoutchouc (Grade 1) | 7,77 | 4,70 | 6,19 | -1,75 |
| Bitume + 1 % Acide Polyphosphorique + 5% Poudrette caoutchouc | 7,36 | 4,61 | 5,75 | -1,36 |
| Bitume + 0,5% Acide Polyphosphorique + 5% Poudrette caoutchouc | 9,13 | 5,48 | 7,31 | - 2,32 |

On note un gain important des modules, c'est-à-dire du module complexe G*, du module élastique G' et du module visqueux G", à température ambiante, 25°C, pour l'ajout de 10% en poids de poudrette de caoutchouc vulcanisé.

De même, on constate une baisse sensible de la susceptibilité thermique IS dès l'ajout de 5% en poids de poudrette de caoutchouc vulcanisé.

4/ <u>Propriétés rhéologiques de bitumes modifié acide polyphosphorique et additivé poudrette caoutchouc. Comparaison des différentes poudrettes.</u>

Les résultats obtenus concernent le module complexe, G*, les composantes élastiques G' et visqueuses G", et l'angle de phase δ.

Dans cet exemple, les modes de préparation du bitume et les essais de rhéologie ont été menés tels que décrits précédemment.

Les différents grades de poudrette caoutchouc ont été comparés sur la base d'une même formulation : Bitume + 1% en poids d'Acide Polyphosphorique + 5% en poids de Poudrette de caoutchouc vulcanisé.

i) Bitume modifié acide avec poudrette Grade 1;

ii) Bitume modifié acide avec poudrette Grade 2;

iii) Bitume modifié acide avec poudrette Grade 3;

iv) Bitume modifié acide avec poudrette Grade 4.

L'ajout de 5% en poids de poudrette de caoutchouc vulcanisé en présence d'acide polyphosphorique (1% en poids d'APP) permet d'obtenir des propriétés rhéologiques nettement améliorées. On observe ainsi une augmentation des modules, G' et G", et une réduction importante de l'angle de phase δ.

Le tableau 8 suivant rassemble les valeurs mesurées à différentes températures, pour une fréquence de 1,5 Hz.

Tableau 8 :

|  | G* -25°C $10^6$ Pa | G* -60° $10^3$ Pa | δ -40°C(Pa) | Tc (°C) |
|---|---|---|---|---|
| Bitume + 1% Acide Polyphosphorique + 5% Poudrette Grade 1 | 0,736 | 13,891 | 53,70 | 83,1 |
| Bitume + 1% Acide Polyphosphorique + 5% Poudrette Grade 2 | 1,10 | 23,194 | 53,48 | 89,0 |
| Bitume + 1% Acide Polyphosphorique + 5% Poudrette Grade 3 | 1,12 | 21,573 | 50,66 | 87,3 |

(suite)

|  | G* -25°C $10^6$ Pa | G* -60° $10^3$ Pa | δ -40°C(Pa) | Tc (°C) |
|---|---|---|---|---|
| Bitume + 1% Acide Polyphosphorique + 5% Poudrette Grade 4 | 0,950 | 17,831 | 50,11 | 84,9 |

Le comportement du bitume additivé est nettement plus élastique.

Parmi les différents grades de poudrette étudiés, les grades 2 et 3 (Necaflex) semblent donner les meilleures propriétés. Il n'y a pas d'effet significatif de la granulométrie : Dmax < 800 μm, et Dmax < 400 μm.

Le grade 1 (Mesallès) semble un peu moins performant.

Le grade 4 (Necaflex) cryobroyé conduit à des performances sensiblement moins bonnes que le grade 2 issus d'un broyage standard.

Le tableau 9 rassemble les valeurs de module à 25°C, ainsi que l'indice de susceptibilité thermique IS.

Tableau 9 :

|  | G* -25°C $10^5$ Pa | G' -25° $10^5$ Pa | G" -25° $10^5$ Pa | IS |
|---|---|---|---|---|
| Bitume + 1% Acide Polyphosphorique + 5% Poudrette Grade 1 | 7,36 | 4,61 | 5,75 | -1,36 |
| Bitume + 1% Acide Polyphosphorique + 5% Poudrette Grade 2 | 11,00 | 7,30 | 8,26 | -1,18 |
| Bitume + 1% Acide Polyphosphorique + 5% Poudrette cGrade 3 | 11,20 | 7,45 | 8,30 | -1,29 |
| Bitume + 1% Acide Polyphosphorique + 5% Poudrette Grade 4 | 9,51 | 6,62 | 6,83 | -1,33 |

Les grade 2 et 3 de poudrette apparaissent sensiblement plus performants.

## Exemple 4 : Influence du temps incorporation du caoutchouc. PROAS 80/100 (Espagne).

Un bitume de grade 80/100 (grade Péné) a été utilisé pour les essais. Il s'agit d'un bitume de provenance de la société PROAS, située en Espagne.

La poudrette utilisée est la poudrette Necaflex de granulométrie : Dmax < 400 microns (Grade 3).

L'incorporation est faite dans le bitume modifé 1% en poids acide polyphosphorique, à 170°C.

La composition est : Bitume + 1% en poids d'Acide Polyphosphorique 105 + 5% en poids de Poudrette de caoutchouc vulcanisé.

Deux temps d'incorporation ont été étudiés :

i) 2h ;
ii) 10h.

Le tableau 10 suivant rassemble les valeurs mesurées à différentes températures, pour une fréquence de 1,5 Hz.(Bitume + 1% en poids d'Acide Polyphosphorique + 5% en poids de Poudrette Grade 3)

Tableau 10 :

|  | G* -25°C $10^6$ Pa | G* -60° $10^3$ Pa | δ -40°C(Pa) | Tc (°C) |
|---|---|---|---|---|
| Malaxage : 2h | 1,12 | 21,573 | 50,6 | 87,3 |
| Malaxage : 10h | 1,53 | 37,141 | 46,1 | 95,1 |

On note une amélioration nette des performances avec le temps de malaxage (comme dans les SBS) : l'angle de phase δ (40°C) est sensiblement réduit et la température critique passe de 87°C à 95°C.

## Exemple 5 : Bitume additivé par un pré-mélange acide/poudrette

Un bitume de grade 80/100, dénommé Pen, a été utilisé pour les essais. Il s'agit d'un bitume de provenance de la société PROAS, située en Espagne.

Un pré-mélange a été réalisé, à température ambiante, avec la poudrette de caoutchouc Grade 2 et l'acide polyphosphorique condensé 105% tel que décrit dans l'exemple 2. Ce prémélange a été fait dans un ratio 5/1 : 83,30 g de poudrette pour 16,65 g d'acide (100 g de pré-mélange).

Ce prémélange a été incorporé dans le bitume chaud, selon une procédure identique à celle décrite dans l'exemple 1, afin d'obtenir un bitume additivé contenant 1% acide et 5% de poudrette.

Les résultats sont comparés à ceux obtenus avec le mélange direct, tel que décrit dans l'exemple 3 -point4/ (cf tableau 8).

Le tableau 11 suivant rassemble les valeurs mesurées à différentes températures, pour une fréquence de 1,5 Hz.(Bitume + 1% en poids d'Acide Polyphosphorique + 5% en poids de Poudrette)

Tableau 11 :

|  | G* -25°C 106 Pa | G* -60° 103 Pa | δ -40°C(Pa) | Tc (°C) |
|---|---|---|---|---|
| Bitume additivé pré-mélange | 0,882 | 19,721 | 51,8 | 87,5 |
| Bitume additivé par mélange direct | 1,10 | 23,194 | 51,1 | 89,0 |

On constate une température critique sensiblement plus élevée pour le mélange direct à chaud dans le bitume des différents constituants.

Le pré-mélange, à température ambiante, avant incorporation dans le bitume à chaud conduit à d'excellentes performances, égales ou très légèrement inférieures au mélange direct.

## Exemple 6 : Comportement à basse température. PROAS 80/100 (Espagne).

Un bitume de grade 80/100, dénommé Pen, a été utilisé pour les essais. Il s'agit d'un bitume de provenance de la société PROAS, située en Espagne.

La fissuration à froid est un facteur important à considérer dans une formulation d'enrobés bitumineux. Les spécifications sur les liants sont concues de manière à ce que les enrobés correspondants aient une bonne résistance au froid. En Europe, les propriétés des liants à basse température sont généralement évaluées par le point de fragilité Fraass. Aux USA, le SHRP a développé un critère basé sur la rigidité d'échantillons de bitumes évaluée au travers d'un essai de fluage : essai BBR (rhéomètre en flexion 3 points).

Une autre manière d'aborder les propriétés des liants à froid est d'évaluer leur température de transition vitreuse (Tg) soit par analyse calorimétrique différentielle (DSC), soit par spectroscopie mécanique (DMA).

Dans l'article 'Evaluation of the Low température Properties of Bituminous Binders Using Calorimetry and Rheology' (J.P. Planche et al., Eurobitume, Luxembourg 1995), les auteurs montrent la bonne corrélation existant entre la valeur de Tg (mesurée en DSC ou DMA) et les températures critiques définies au travers du test BBR de fluage (S = 300 MPa, et m > 0,3).

La température de transition vitreuse , Tg, a été mesurée en DSC sur le bitume 80/100 Proas. L'influence de l'ajout de 10% en poids de poudrette de caoutchouc vulcanisé a été regardé, ainsi que le système 1 % en poids d'acide polyphosphorique + 5% en poids de poudrette de caoutchouc vulcanisé.

Le tableau 12 suivant rassemble les valeurs caractéristiques : Tg , mais aussi G* x sin δ (critère de fatigue à température ambiante), ainsi que la température critique haute Tc+.

Tableau 12 :

|  | Tg (°C) | G* -25°C $10^6$ Pa | G* x sin δ -25°C $10^6$ Pa | Tc+ (°C) |
|---|---|---|---|---|
| Bitume de ref (Proas 80/100) | - 27 | 0,31 | 0,288 | + 64,4 |
| Bitume + 10% Poudrette caoutchouc (Grade 1) | - 23 | 0,776 | 0,618 | +79,5 |
| Bitume + 1% Acide Polyphosphorique + 5% Poudrette caoutchouc (Grade 1) | - 29 | 0,736 | 0,57 | + 83,1 |

La Tg du bitume 80/100 Proas est relativement basse : Tg = - 27°C.

L'ajout de 10% en poids de poudrette caoutchouc vulcanisé remonte la Tg de 6°C : Tg = - 23°C.

Avec 5% en poids de poudrette de caoutchouc vulcanisé et 1% en poids d'acide polyphosphorique, la Tg est descendu de 2 °C : Tg = - 29°C.

Cette Tg plus basse correspond à une meilleure résistance à la fissuration à froid du bitume.

**Exemple 7 : Influence de la nature du caoutchouc. PROAS 80/100 (Espagne).**

Un bitume de grade 80/100 (grade Péné), a été utilisé pour les essais. Il s'agit d'un bitume de provenance de la société PROAS, située en Espagne.

Deux types de caoutchouc ont été spécialement préparés (labo) : caoutchouc vulcanisé sans ajout de noir de carbone, et caoutchouc vulcanisé contenant 50 parties pour cent d'élastomère (pce) de Noir de Carbone N234 Cabot.

Des poudrettes ont été obtenues par cryo-broyage (échelle labo) : granulo Dmax < 500 microns.

On obtient donc deux types de poudrettes :

i) Poudrette de Caoutchouc vulcanisé chargé noir de carbone

ii) Poudrette de Caoutchouc vulcanisé sans noir de carbone

L'acide polyphosphorique utilisé est l'acide condensé 105 % (cf exemple 2).

Le tableau 13 suivant rassemble les valeurs mesurées à différentes températures, pour une fréquence de 1,5 Hz.(Bitume + 1% en poids d'Acide Polyphosphorique + 5% en poids de Poudrette)

Tableau 13 :

| | G* -25°C 106 Pa | G* -60° 103 Pa | $\delta$ -40°C(Pa) | Tc (°C) |
|---|---|---|---|---|
| Poudrette : caoutchouc avec Noir de carbone (50 pce) | 0,864 | 17,032 | 54 | 85,7 |
| Poudrette : caoutchouc sans Noir de carbone | 0,965 | 22,442 | 50 | 89,5 |

On constate une température critique sensiblement plus élevée pour la poudrette sans noir de carbone : ceci peut être due à une plus forte teneur en caoutchouc.

La présence de noir de carbone, et donc le type de noir de carbone, ne semble pas avoir d'impact dans les performances du bitume additivé.

**Exemple 8 : Préparation d'un bitume additivé et détermination de ses propriétés sans ou après vieillissement**

Un bitume routier A provenant de la société Proas, de pénétration 110 1/10 mm et Température de Ramollissement Bille et Anneau (TBA) 44°C a été modifié selon le procédé de la présente invention avec la formule indiquée dans le tableau 14 suivant :

Tableau 14 : formule du bitume modifiée 1 :

| Ingrédient | % en poids |
|---|---|
| Bitume A | 94 % |
| Poudrette de caoutchouc vulcanisé | 5 % |
| Acide polyphosphorique | 1 % |

La poudrette de caoutchouc vulcanisé utilisée a une taille nominale comprise entre 0 et 500$\mu$m et un diamètre médian de 320$\mu$m.

L'acide polyphosphorique utilisé est un acide condensé à 105 % (Rhodia).

La fabrication a été réalisée en laboratoire à 180°C en introduisant d'abord la poudrette de caoutchouc vulcanisé dans le bitume et en maintenant une forte agitation pendant 90 min, puis en ajoutant ensuite l'Acide polyphosphorique et en maintenant l'agitation 30 min.

Une fois refroidi, le bitume modifié 1 a été évalué tel quel, c'est-à-dire sans vieillissement simulé, et après vieillissement accélérée sous l'effet de la température et de l'air (« Rolling Thin Film Over Test » RTFOT selon la norme EN 12607-1) par les essais décrits dans le tableau 15 ci-dessous :

Tableau 15 : résultat des essais réalisés sur le bitume modifié 1 initial ou vieilli

| Essai | méthode | Bitume modifié 1 initial | Bitume modifié 1 vieilli RTFOT | |
|---|---|---|---|---|
| température de déformation sous contrainte BBR | (AASHTO TP1-98) | $T_S^*{}_{=300MPa}$ = -24,8°C $(T_m^{**})$ = 0,3 = - 25,9°C | | |
| Rhéomètre en cisaillement dynamique (DSR) (« Dynamic Shear Rheometer ») mesures à10 rad/s | (AASHTO TP5-98) | G* (25°C) = 775 kPa δ (40°C) = 64,2° Pente G* = f(T) entre 20-60°C = -0,044 $T_{1kPa}^{***}$ = 80,4°C | G* (25°C) =1450 kPa $T_{2,2\,kPa}^{***}$ = 81,4°C | Rapport = 1,87 ΔT = 1°C |
| Indice de Platicité (IP) **** | SHRP | 105,2°C | | |
| Cohésion | (NF T 66027) | 1,05 J/cm$^2$ $T_{max}$ = 40°C | | |
| *Température telle que le module S de fluage mesuré après 60s à l'essai BBR soit de 300MPa **Température telle que la valeur absolue m de la pente de la courbe du log du module de fluage en fonction du log du temps, mesurée après 60 s à l'essai BBR (Bending beam Rheometer) soit de 0,3. ***température telle que le module G*/sin d mesuré à 10 rad/s à l'essai DSR soit de 1,1 kPa (ou 2,2 kPa). ****L'IP est défini comme l'écart entre la plus haute des températures limites basses (T S = 300 MPa ou T m= 0,3) et la plus basse des températues limites hautes (T1kPa ou T 2,2 kPa). | | | | |

Les résultats obtenus pour le bitume modifié 1 initial ou vieilli sont donc comparables à ceux obtenus pour divers bitumes modifiés par des polymère commerciaux (article de B. Brûlé et J. J. Potti, Carreteras 121, 2002). Suivant la grille d'évaluation proposée dans cette étude, le bitume modifié obtient une note de 9, comparable à celle de bitumes modifiés commerciaux, et largement supérieure à celle obtenu pour un bitume non-modifié standard (valeur typique de 3 pour un bitume 70/100).

## Exemple 9 : Réparation d'un bitume additivé à l'échelle industrielle

La formule de l'exemple 8 précédent a été réalisée à échelle industrielle pour obtenir plusieurs tonnes d'un bitume modifié 2 de même formule que le bitume modifié 1 et à partir des mêmes ingrédients. Ce bitume modifié 2 a été caractérisé après fabrication. Les tests et résultats sont rassemblés dans le tableau 16 suivant :

Tableau 16 : résultats des essais réalisés sur le bitume modifié 2

| essai | méthode | unité | résultat bitume modifié 2 |
|---|---|---|---|
| pénétration | EN 1426 | 1/10 mm | 65 |
| TBA | EN 1427 | °C | 55 |
| retour élastique | NLT 329 | % | 28 |
| Viscosité à 140°C | ASTM D4402 | mPa.s | 1136 |

Ce bitume modifié 2 a ensuite été utilisé pour fabriquer et mettre en oeuvre un enrobé bitumineux semi-grenu 0/12 (Enrobé A) selon le fuseau normalisé espagnol S 12 avec 4,8 parties de liant pour 100 parties de granulats secs et 5 % en volume de vides.
La stabilité Marshall de l'enrobé ainsi fabriqué a été mesurée en comparaison avec celle du même enrobé, mais réalisé avec un bitume non-modifié B 40/50 de la société Proas de pénétration 42 1/10mm, de TBA 55°C de référence (Enrobé B). Les résultats sont rassemblés dans le tableau 17 suivant :

Tableau 17 : comparaison entre les enrobés obtenus à partir d'un bitume modifié selon la présente invention ou non modifié

| essai | méthode | unité | enrobé A | enrobé B |
|---|---|---|---|---|
| nature du liant | | | bitume modifié 2 | bitume non-modifié B |
| teneur en liant | | parties pour cent (ppc) | 4,77 | 4,75 |
| teneur en vides | NLT 168 | % en vol | 5,4 | 4,9 |
| stabilité Marshall | NLT 159 | kgf | 2120 | 1224 |

La mise en oeuvre de l'enrobé A, réalisée à l'aide de matériel de chantier classique (au finisseur), n'a posé aucun problème particulier et a été jugée très satisfaisante et comparable en terme de maniabilité à celle de l'enrobé B. Ceci n'est pas le cas avec les enrobés aux bitumes modifiés polymère commerciaux actuels qui présentent une maniabilité réduite par rapport aux enrobés au bitume classique.

**Exemple 10 : comparaison de bitumes additivés avec des poudrettes de différentes provenance et compositions**

5 Poudrettes de caoutchouc vulcanisé de provenance et composition variée ont été chacune mélangées à un bitume routier B fourni par Petrogal, de pénétration 78 1/10 mm et Température de Ramollissement Bille et Anneau (TBA) 45,6°C, selon le procédé et la composition suivante :

Bitume B                                         94 % en poids
Poudrette de caoutchouc vulcanisé   5 % en poids
Acide polyphosphorique                  1 % en poids

L'acide polyphosphorique utilisé est un acide condensé à 105 % (Rhodia).
La fabrication a été réalisée en laboratoire à 180°C en introduisant d'abord la poudrette de caoutchouc vulcanisé et maintenant une forte agitation pendant 90 min, puis en ajoutant ensuite l'Acide polyphosphorique et maintenant l'agitation 30 min.
A titre de comparaison, des mélanges ont aussi été réalisés avec chacune des 5 poudrettes et le bitume B, mais sans addition d'acide, c'est-à-dire selon la composition suivante :

Bitume B                                         95 % en poids
Poudrette de caoutchouc vulcanisé   5 % en poids

La fabrication a été réalisée en laboratoire à 180°C en introduisant la poudrette de caoutchouc vulcanisé et maintenant une forte agitation pendant 120 min.
Les poudrettes ont été caractérisées par leur diamètre médian en volume mesuré par diffraction laser sur un appareil Malvern Multisizer 2000. Les résultats sont rassemblés dans le tableau 18 suivant :

Tableau 18 : caractérisation des 5 poudrettes

| | | Poudrette a | Poudrette b | Poudrette c | Poudrette d | Poudrette e |
|---|---|---|---|---|---|---|
| Origine | | inconnue | 100% en poids issu de la récupération de pneu de camion | 100% en poids issu de la récupération de pneu de camion | 70% en poids issu de la récupération de pneu de camion 30% en poids issu de la récupération de pneu de voiture | 70 % en poids issu de la récupération de pneu de camion 30 % en poids issu de la récupération de pneu de voiture |
| Taille nominale | μm | 0-500 | 0-800 | 0-400 | 0-800 | 0-400 |

(suite)

|  | | Poudrette a | Poudrette b | Poudrette c | Poudrette d | Poudrette e |
|---|---|---|---|---|---|---|
| diamètre médian | μm | 320 | 411 | 419 | 524 | 394 |

Les bitumes modifiés ont été évalués selon les essais donnés dans le tableau 19 suivant :

| Mélange | | Méthode | Unité | | a1 | a0 | b1 | b0 | c1 | c0 | d1 | d0 | e1 | e0 |
|---|---|---|---|---|---|---|---|---|---|---|---|---|---|---|
| Composition | Bitume B | | % en poids | 100 | 94 | 95 | 94 | 95 ' | 94 | 95 | 94 | 95 | 94 | 95 |
| | Nature Poudrette | | | - | a | a | b | b | c | c | d | d | e | e |
| | Teneur Poudrette | | % en poids | 0 | 5 | 5 | 5 | 5 | 5 | 5 | 5 | 5 | 5 | 5 |
| | Acide Polyphosphorique | | % en poids | 0 | 1 | 0 | 1 | 0 | 1 | 0 | 1 | 0 | 1 | 0 |
| Caractérisation Essai | pénétration | EN 1426 | 1/10 mm | 78 | 53 | 63 | 53 | 63 | 53 | 64 | 50 | 64 | 52 | 65 |
| | TBA | EN 1427 | °C | 45,6 | 53 | 49,2 | 56,2 | 51,2 | 56,4 | 51,8 | 55,6 | 51,1 | 56,4 | 51,2 |
| | IP | EN 12591 | | -1,3 | -0,3 | -0,8 | 0,4 | -0,3 | 0,5 | -0,1 | 0,1 | -0,3 | 0,4 | -0,2 |
| | ductilité à 5°C | NLT 126 | cm | | 14 | 19 | 10 | 14 | 9 | 11 | 8 | 11 | 9 | 12 |
| | retour élastique | NLT 329 | % | | 13 | 8 | 36 | 33 | 33 | 35 | 36 | 36 | 31 | 32 |
| | viscosité à 140°C | ASTM D4402 | mPa.s | | 550 | 393 | 1077 | 499 | 1015 | 722 | 963 | 420 | 1022 | 494 |
| | viscosité à 160°C | ASTM D4402 | mPa.s | | 218 | 168 | 280 | 252 | 404 | 304 | 337 | 195 | 406 | 228 |
| | Viscosité à 180°C | ASTM D4402 | mPa.s | | 108 | 86 | 141 | 106 | 203 | 111 | 194 | 103 | 193 | 108 |
| stabilité au stockage | | NLT 328 | | | | | | | | | | | | |
| | pénétration haute | | 1/10 mm | | 49 | 52 | 48 | 53 | 48 | 55 | 48 | 54 | 47 | 53 |
| | pénétration basse | | 1/10 mm | | 65 | 80 | 65 | 78 | 59 | 78 | 67 | 78 | 50 | 78 |
| | différence de pénétration | | 1/10 mm | | -16 | -28 | -17 | -25 | -11 | -23 | -19 | -24 | -3 | -25 |
| | TBA haute | | °C | | 53,4 | 50,8 | 54,2 | 50,2 | 53,8 | 50,6 | 54,8 | 51,2 | 54,4 | 51,0 |
| | TBA basse | | °C | | 61,2 | 55,6 | 59,6 | 55,7 | 58,8 | 55,2 | 60 | 56,3 | 59,6 | 56,3 |
| | différence de TBA | | °C | | -7,8 | -4,8 | -5,4 | -5,5 | -5 | -4,6 | -5,2 | -5,1 | -5,2 | -5,3 |

Dans tous les cas, l'addition d'acide polyphosphorique permet d'améliorer les propriétés mécaniques du bitume modifié par de la poudrette de caoutchouc vulcanisé,

indépendamment de son origine, et avec une stabilité au stockage qui se maintient au niveau de celle du mélange sans acide.

### Exemple 11 : Emulsion de bitume modifié selon la présente invention

Le mélange b1 de l'exemple 10 a été émulsifié à l'aide d'un moulin colloidal de laboratoire Emulbitume. Pour ce faire, le liant modifié a été porté à la température de 170 °C lui donnant une viscosité d'environ 200 mPa.s.

Deux formules différentes ont été utilisées, correspondant à deux applications potentielles de l'invention : une émulsion pour enduit superficiel (Emulsion 1) et une émulsion pour enrobés coulés à froid (Emulsion 2).

Les compositions de chacune des émulsions et leurs propriétés correspondantes sont rassemblés dans le tableau 20 suivant :

Tableau 20 : propriétés et compositions des émulsions de bitume modifié selon la présente invention

| Emulsion | | Méthode | Unité | Emulsion 1 | Emulsion 2 |
|---|---|---|---|---|---|
| Composition | Bitume Modifié b1 | | % en poids émulsion | 64 | 60 |
| | Emulsifiant | | nature | Diamine grasse* | polyamine grasse** |
| | | | % en poids émulsion | 0,3 | 0,4 |
| | pH phase aqueuse | | - | 2,5 | 2,5 |
| caractérisation | viscosité Saybolt Furol à 50°C | NLT 138 | s | 30 | 20 |
| | Charge électrique des Particules | NLT 194 | - | positive | positive |
| | teneur en eau | NLT 137 | % en poids | 35 | 40 |
| | liant résiduel | NLT 139 | % en poids | 65 | 60 |
| | fluidifiant par distillation | NLT 139 | % en poids | 1 | 0 |
| | Sédimentation à 7 jours | NLT 140 | % | 0 | 8 |
| | Refus au tamis | NLT 142 | % en poids | 0,02 | 0,04 |
| caractérisation du résidu par évaporation | | NLT 147 | | | |
| | pénétration | EN 1426 | 1/10 mm | 58 | 51 |
| | TBA | EN 1427 | °C | 55,2 | 56,4 |
| | ductilité à 5°C | NLT 126 | cm | 10 | 9 |
| | retour élastique | NLT 329 | % | 35 | 34 |
| * ASSIER®130 par Kao <br> ** ASSIER®208 par Kao | | | | | |

Le liant modifié selon l'invention peut donc se mettre en émulsion à l'aide des technologies en usage dans la profession et donne alors des émulsions de répandage (type emulsion 1) ou d'enrobage (type émulsion 2) dont les propriétés répondent aux spécifications correspondantes.

**Exemple 12 :**

Une poudrette de caoutchouc de la société Mésallès a été mélangée à un bitume routier C fourni par Repsol Puertollano, de pénétration 80 1/10 mm et Température de Ramollissement Bille et Anneau 48,6°C pour obtenir un liant modifié concentré de composition :

| | |
|---|---|
| Bitume C | 88 % en poids |
| Poudrette de caoutchouc | 10 % en poids |
| Acide polyphosphorique | 2 % en poids |

L'acide polyphosphorique utilisé est un acide condensé à 105 % (Rhodia).

La fabrication a été réalisée en laboratoire à 180°C en introduisant d'abord la poudrette de caoutchouc et maintenant une forte agitation pendant 90 min, puis en ajoutant ensuite l'Acide polyphosphorique et maintenant l'agitation 30 min.

Le liant concentré modifié a ensuite été dilué à un rapport massique 50/50 par un bitume D de Cepsa de pénétration 91 1/10 mm et Température de Ramollissement Bille et Anneau 49,2°C, pour obtenir un nouveau bitume modifié ayant cette fois une teneur globale en poudrette de 5 % et une quantité globale d'acide polyphosphorique de 1 %.

Le liant concentré et le bitume modifié correspondant ont été évalués selon les essais donnés dans le tableau 21 suivant :

Tableau 21 :

| | norme | unité | | liant modifié concentré | bitume modifié 3 |
|---|---|---|---|---|---|
| Bitume C | | % en poids | 100 | 88 | - |
| Teneur Poudrette | | % en poids | - | 10 | - |
| Acide Polyphosphorique | | % en poids | - | 2 | - |
| Liant concentré modifié | | % en poids | - | - | 50 |
| Bitume D | | % en poids | - | - | 50 |
| pénétration | EN 1426 | 1/10 mm | 80 | 34 | 52 |
| TBA | EN 1427 | °C | 48,5 | 83,0 | 56,2 |
| IP | EN 12591 | | -0,4 | 3,8 | 0,3 |
| retour élastique | NLT 329 | % | | 38 | 13 |
| viscosité 140°C | ASTM D4402 | mPa.s | | - | 600 |
| viscosité 150°C | ASTM D4402 | mPa.s | | 5700 | - |
| viscosité 160°C | ASTM D4402 | mPa.s | | 2200 | 242 |
| viscosité 180°C | ASTM D4402 | mPa.s | | 840 | 121 |

Le bitume modifié obtenu par dilution d'un liant modifié concentré possède ainsi des propriétés améliorées par rapport à un bitume non-modifié et donne des résultats comparables à ceux donnés dans les exemples précédents par l'addition directe de 5 % de poudrette et de 1 % d'acide.

**Revendications**

1. Procédé de préparation d'un liant bitumineux comprenant les étapes successives suivantes de :

   a)- mélange de 0,05 à 5 % en poids d'acide, de 0,5 à 25 % en poids de poudrettes de caoutchouc et de 70 à 99,5 % en poids de bitume chauffé à une température comprise entre 120 et 220°C,
   b)- chauffage du mélange à une température comprise entre 120 et 220°C pendant un temps compris entre 15 minutes et 10 heures, avantageusement entre 15 minutes et 3 heures, sous agitation, et
   c)- le cas échéant, dégazage des bulles d'air éventuellement présentes dans le mélange.

**2.** Procédé selon la revendication 1, **caractérisé en ce que** l'acide est un acide phosphorique ou un acide polyphosphorique.

**3.** Procédé selon la revendication 1 ou 2, **caractérisé en ce que** l'étape a) est réalisée par mélange du bitume et de l'acide suivi de l'ajout des poudrettes de caoutchouc.

**4.** Procédé selon la revendication 1 ou 2, **caractérisé en ce que** l'étape a) est réalisée par le pré-mélange de l'acide et des poudrettes de caoutchouc avant leur ajout dans le bitume.

**5.** Procédé selon la revendication 1 ou 2, **caractérisé en ce que** l'étape a) est réalisée par mélange d'au moins une partie du bitume, chauffé à une température comprise entre 120 et 220°C, et des poudrettes de caoutchouc suivi de l'ajout de l'acide et le cas échéant, addition finale de la partie restante de bitume.

**6.** Liant bitumineux susceptible d'être obtenu par le procédé selon l'une quelconque des revendications précédentes.

**7.** Liant bitumineux selon la revendications 6, **caractérisé en ce que** le rapport de viscosité à 135°C entre un liant sans acide et un liant contenant de l'acide soit comprise entre 10 et 70 %, avantageusement comprise entre 10 et 50 %, et **en ce que** la différence de température critique entre un liant sans acide et un liant contenant de l'acide soit comprise entre 1 et 50°C, avantageusement entre 1 et 25°C.

**8.** Utilisation du liant selon la revendication 6 ou 7 dans des matériaux de construction, notamment des matériaux de toiture.

**9.** Utilisation du liant selon la revendication 6 ou 7 comme agent d'étanchéité, comme enduit superficiel ou comme système anti-remontée de fissures.

**10.** Béton bitumineux comprenant le liant selon la revendication 7 et la quantité nécessaire de granulats.

**11.** Procédé de préparation du béton bitumineux selon la revendication 10, **caractérisé en ce que** des granulats sont ajoutés au liant selon la revendication 6 ou 7 sous agitation à une température comprise entre 120 et 220°C.

**12.** Procédé de préparation du béton bitumineux selon la revendication 10 **caractérisé en ce qu'**il comprend les étapes suivantes :

i) préparation d'une émulsion de bitume en mélangeant de l'eau, un liant bitumineux selon la revendication 6 ou 7 et un émulsifiant à température ambiante,
ii) incorporation de granulats dans l'émulsion de bitume, obtenue à l'étape i), sous agitation à température ambiante,
iii) on épand l'émulsion obtenue à l'étape ii) pour obtenir une couche uniforme du mélange obtenu à l'étape ii),
iv) on casse l'émulsion de bitume.

**13.** Utilisation du béton bitumineux selon la revendication 10 pour la fabrication de chaussée, notamment de la couche de roulement d'une chaussée ou d'une route, comme enduit superficiel ou comme système anti-remontée de fissures.

**14.** Utilisation d'un acide pour faciliter l'incorporation de poudrettes de caoutchouc dans un liant bitumineux par le procédé selon l'une des revendications 1 à 5.

**15.** Pré-mélange comprenant entre 0,02 % et 91 % en poids d'acide et entre 9 % et 99,98 % en poids de poudrette de caoutchouc utilisable dans le procédé selon l'une des revendications 1, 2 et 4.

**Claims**

**1.** Method for preparing a bituminous binder comprising the following successive steps:

a) mixing 0.05 to 5 wt.% acid, 0.5 to 25 wt.% rubber crumb and 70 to 99.5 wt.% bitumen heated to a temperature of between 120 and 220°C,
b) heating the mixture to a temperature of between 120 and 220°C for a time of between 15 minutes and 10 hours, advantageously between 15 minutes and 3 hours, under stirring, and
c) optionally degassing any air bubbles which may have occurred in the mixture.

2. Method according to claim 1, **characterized in that** the acid is a phosphoric acid or polyphosphoric acid.

3. Method according to claim 1 or 2, **characterized in that** step a) is performed by mixing the bitumen and acid followed by the addition of rubber crumb.

4. Method according to claim 1 or 2, **characterized in that** step a) is performed by pre-mixing the acid and rubber crumb before their addition to the bitumen.

5. Method according to claim 1 or 2, **characterized in that** step a) is performed by mixing at least part of the bitumen heated to a temperature of between 120 and 220°C, and the rubber crumb followed by the addition of the acid and optionally the final addition of the remaining bitumen.

6. Bituminous binder obtainable using the method according to any of the preceding claims.

7. Bituminous binder according to claim 6, **characterized in that** the viscosity ratio at 135°C between an acid-free binder and an acid-containing binder is between 10 and 70%, advantageously between 10 and 50%, and **in that** the difference in critical temperature between an acid-free binder and an acid-containing binder lies between 1 and 50°C, advantageously between 1 and 25°C.

8. Use of the binder according to claim 6 or 7 in building materials, roofing materials in particular.

9. Use of the binder according to claim 6 or 7 as sealant, as surface coating or as reflective cracking protection system.

10. Bituminous concrete containing the binder according to claim 7 and the necessary quantity of aggregate.

11. Method for preparing a bituminous concrete according to claim 10, **characterized in that** the aggregate is added to the binder according to claim 6 or 7 under stirring at a temperature of between 120 and 220°C.

12. Method for preparing a bituminous concrete according to claim 10, **characterized in that** it comprises the following steps:

i) Preparing a bitumen emulsion by mixing water, a bituminous binder according to claim 6 or 7 and an emulsifier at ambient temperature,
ii) incorporating aggregate into the bitumen emulsion obtained at step i), under stirring at ambient temperature,
iii) spreading the emulsion obtained at step ii) to obtain a uniform layer of the mixture obtained at step ii),
iv) breaking the bitumen emulsion.

13. Use of the bituminous concrete according to claim 10 for roadway construction, in particular for the wearing course of a roadway, as a surface coating or as a reflective cracking protection system.

14. Use of an acid to facilitate the incorporation of rubber crumb into a bituminous binder by the method according to any of claims 1 to 5.

15. Pre-mix containing between 0.02 wt.% and 91 wt.% acid and between 9 and 99.98 wt.% rubber crumb that can be used in the method according to any of claims 1, 2 and 4.

**Patentansprüche**

1. Verfahren zur Herstellung eines bitumenhaltigen Bindemittels, das die folgenden aufeinanderfolgenden Schritte umfasst:

a) Mischen von 0,05 bis 5 Gew.-% Säure, von 0,5 bis 25 Gew.-% Gummipulver und von 70 bis 99,5 Gew.-% Bitumen, das auf eine Temperatur zwischen 120 und 220 °C erhitzt ist,
b) Erhitzen des Gemischs auf eine Temperatur zwischen 120 und 220 °C über eine Zeit zwischen 15 Minuten und 10 Stunden, vorteilhafterweise zwischen 15 Minuten und 3 Stunden, unter Agitation, und
c) gegebenenfalls Entgasen der Luftblasen, die gegebenenfalls in der Mischung vorhanden sind.

**2.** Verfahren nach Anspruch 1, **dadurch gekennzeichnet, dass** die Säure eine Phosphorsäure oder eine Polyphosphorsäure ist.

**3.** Verfahren nach Anspruch 1 oder Anspruch 2, **dadurch gekennzeichnet, dass** der Schritt a) durch Mischen des Bitumens und der Säure, gefolgt von der Zugabe des Gummipulvers, durchgeführt wird.

**4.** Verfahren nach Anspruch 1 oder Anspruch 2, **dadurch gekennzeichnet, dass** der Schritt a) durch das Vormischen der Säure und des Gummipulvers vor deren Zugabe in das Bitumen durchgeführt wird.

**5.** Verfahren nach Anspruch 1 oder Anspruch 2, **dadurch gekennzeichnet, dass** der Schritt a) durch Mischen von zumindest einem Teil des Bitumens, das auf eine Temperatur zwischen 120 und 220 °C erhitzt ist, und dem Gummipulver durchgeführt wird, gefolgt von der Zugabe der Säure und gegebenenfalls der abschließenden Zugabe des restlichen Teils des Bitumens.

**6.** Bitumenhaltiges Bindemittel, das durch das Verfahren nach einem der vorhergehenden Ansprüche erhalten werden kann.

**7.** Bitumenhaltiges Bindemittel nach Anspruch 6, **dadurch gekennzeichnet, dass** das Viskositätsverhältnis bei 135 °C zwischen einem Bindemittel ohne Säure und einem säurehaltigen Bindemittel zwischen 10 und 70%, vorteilhafterweise zwischen 10 und 50%, beträgt, und dass der kritische Temperaturunterschied zwischen einem Bindemittel ohne Säure und einem säurehaltigen Bindemittel zwischen 1 und 50 °C, vorteilhafterweise zwischen 1 und 25 °C, beträgt.

**8.** Verwendung des Bindemittels nach Anspruch 6 oder 7 in Baumaterialien, insbesondere in Bedachungsmaterialien.

**9.** Verwendung des Bindemittels nach Anspruch 6 oder 7 als Dichtmittel, als Oberflächenanstrich oder als das Aufsteigen von Rissbildungen verhinderndes System.

**10.** Bitumenhaltiger Beton, enthaltend das Bindemittel nach Anspruch 7 und die benötigte Menge an Zuschlagsstoffen.

**11.** Verfahren zur Herstellung des bitumenhaltigen Betons nach Anspruch 10, **dadurch gekennzeichnet, dass** Zuschlagsstoffe dem Bindemittel nach Anspruch 6 oder 7 unter Agitataion bei einer Temperatur zwischen 120 und 220 °C zugegeben werden.

**12.** Verfahren zur Herstellung des bitumenhaltigen Betons nach Anspruch 10, **dadurch gekennzeichnet, dass** es die folgenden Schritte umfasst:

i) Herstellung einer Bitumenemulsion durch Mischen von Wasser, einem bitumenhaltigen Bindemittel nach Anspruch 6 oder 7 und einem Emulgator bei Umgebungstemperatur,
ii) Untermischen von Zuschlagsstoffen in die in Schritt i) erhaltene Bitumenemulsion unter Agitation bei Umgebungstemperatur,
iii) Ausbringen der in Schritt ii) erhaltenen Emulsion, um eine gleichförmige Schicht der in Schritt ii) erhaltenen Mischung zu erhalten,
iv) Brechen der Bitumenemulsion.

**13.** Verwendung des bitumenhaltigem Betons nach Anspruch 10 für die Herstellung einer Fahrbahn, insbesondere der Decklage einer Fahrbahn oder einer Straße, als Oberflächenanstrich oder als das Aufsteigen von Rissbildungen verhinderndes System.

**14.** Verwendung einer Säure zur Vereinfachung des Untermischens von Gummipulver in ein bitumenhaltiges Bindemittel durch das Verfahren nach einem der Ansprüche 1 bis 5.

**15.** Vormischung, enthaltend zwischen 0,02 Gew.-% und 91 Gew.-% Säure und zwischen 9 Gew.-% und 99,98 Gew.-% Gummipulver, die in dem Verfahren nach einem der Ansprüche 1, 2 und 4 verwendbar ist.

**EP 1 606 344 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9844047 A
- WO 9628513 A
- WO 9528446 A
- FR 2764897
- FR 2732702
- FR 2657447

**Littérature non-brevet citée dans la description**

- **D.E.C. Corbridge.** Phosphorus an outline of its Chemistry, Biochemistry and Uses. Elsevier, 1995, 170, 180-182
- **J.P. Planche et al.** Evaluation of the Low température Properties of Bituminous Binders Using Calorimetry and Rheology. *Eurobitume, Luxembourg,* 1995